# FASCICULE DE BREVET EUROPEEN

(11) **EP 3 303 904 B1**
(45) Date de publication et mention de la délivrance du brevet: **23.09.2020**
(21) Numéro de dépôt: 16734432.4
(22) Date de dépôt: 08.06.2016
(51) Int. Cl.: F17C 5/06, F17C 7/00, F17C 13/02, F17D 1/02

(54) **DISPOSITIF ET PROCÉDÉ D'INJECTION DE DIHYDROGÈNE DANS UN FLUX DE GAZ NATUREL ISSU D'UN PREMIER RÉSEAU DE DISTRIBUTION DE GAZ NATUREL**
VORRICHTUNG UND VERFAHREN ZUR INJEKTION VON DIHYDROGEN IN EINEN STROM EINES ERDGASES, DAS AUS EINEM ERSTEN ERDGASVERTEILUNGSNETZWERKS STAMMT
DEVICE AND METHOD FOR INJECTING DIHYDROGEN INTO A FLOW OF NATURAL GAS ORIGINATING FROM A FIRST NATURAL GAS DISTRIBUTION NETWORK

(30) Priorité: 08.06.2015 FR 1555223
(43) Date de publication de la demande: 11.04.2018
(73) Titulaire: GRDF, 75009 Paris (FR)
(72) Inventeur: METZ, Benjamin, 92340 Bourg La Reine (FR)
(74) Mandataire: Cornuejols, Georges
(86) Numéro de dépôt international: PCT/FR2016/051378
(87) Numéro de publication internationale: WO 2016/198791

(56) Documents cités:
- WO-A2-2006/031365
- DE-A1-102008 057 694
- FR-A1- 2 955 642
- GB-A- 1 449 464
- US-A- 4 277 254
- US-A1- 2004 112 427
- US-B1- 6 745 799

## Description

### DOMAINE TECHNIQUE DE L'INVENTION

La présente invention vise un dispositif et procédé d'injection de dihydrogène dans un flux de gaz naturel issu d'un premier réseau de distribution de gaz naturel. Elle s'applique, notamment, à l'alimentation en gaz naturel d'un réseau de distribution urbain.

### ÉTAT DE LA TECHNIQUE

Il est connu de l'art antérieur des procédés et dispositifs visant à mettre en conformité du gaz naturel, notamment en vue de sa consommation.

Il est également connu de stocker une forme d'énergie dans le réseau de gaz naturel, sous la forme d'hydrogène.

On connaît des systèmes, tels que décrits dans le document EP2045507, qui mettent en œuvre un dispositif d'injection de biogaz dans une canalisation, en vue d'approvisionner les utilisateurs exclusivement avec ce biogaz. Cependant, ces systèmes sont limités aux biogaz et présentent des lacunes en termes de mélange de gaz de natures différentes, et de respect de proportions en composants du mélange.

L'injection de dihydrogène présente des risques en raison du caractère extrêmement inflammable de ce gaz, et de la modification des paramètres de combustion du mélange de gaz ainsi obtenu.

Injecter de l'hydrogène dans un réseau de distribution de gaz naturel implique un dispositif qui réponde aux contraintes d'un poste réseau classique, en plus des contraintes spécifiques à l'injection d'hydrogène :
- assurer un approvisionnement continu qui réponde à une consommation variable en aval,
- garantir la sécurité des personnes et des biens,
- fournir un mélange homogène qui réponde à des spécifications de qualité et qui respecte une proportion d'hydrogène prédéterminée,
- compter en temps réel le volume et le contenu énergétique du gaz injecté dans le réseau de distribution et
- piloter automatiquement l'injection.

On connaît des systèmes tels que décrits dans la demande de brevet américaine US 4 227 254. Dans ces systèmes, au moins deux gaz combustibles, issus d'autant de réseaux distincts, sont mélanges et injectés dans une conduite de sortie, avec pour objectif que le gaz mixé injecté présente un pouvoir calorifique constant : « *Signais représentative of each of these values are fed signal computing means where signais are developed to control signal-receiving means which in turn control the flow-varying means to cause the heating value equivalency of the mélange of fuel gases and air to equal the heating value equivalency of the fuel gas used in initially adjusting the gas burners of the gas appliances in which the fuel gas mixture is to be used.* » (Colonne 2, lignes 39 à 47).

De tels systèmes ne permettent pas de fournir, de manière continue, le mélange de gaz à la conduite de sortie si l'approvisionnement en l'un ou l'autre des gaz combustibles, dans la conduite associée, varie brutalement.

On connaît également des systèmes tels que décrits dans la demande de brevet allemande DE 10 2008 057694. Dans ces systèmes, de l'hydrogène et du gaz naturel sont injectés dans un réseau commun en proportions non maîtrisées variant au gré de la production d'hydrogène et de gaz naturel. Ce réseau commun alimente différentes installations qui utilisent, sans différenciation, le gaz naturel, l'hydrogène ou un mélange des deux.

De tels systèmes ne permettent aucune maîtrise de la composition du gaz fourni aux installations consommant ce gaz.

On connaît également des systèmes tels que décrits dans le brevet américain US 6 745 799. Dans ces systèmes, on fournit en gaz un réseau local de consommation de gaz, le gaz fourni étant un mélange entre un gaz naturel et un gaz miscible avec ce gaz naturel. Ces gaz sont ensuite séparés au niveau du réseau local de consommation pour des utilisations diverses.

De tels systèmes ne permettent aucune maîtrise de la composition du mélange de gaz fournie aux installations consommant ce gaz.

On connaît enfin des systèmes tels que décrits dans la demande de brevet française FR 2 955 642. Dans ces systèmes, on fournit alternativement en hydrogène ou en gaz naturel une installation de consommation de gaz.

On connaît de WO 2006/031365 un dispositif de fourniture d'hydrogène.

De tels systèmes, binaires, ne permettent pas de fournir l'installation de consommation de gaz en un mélange de gaz naturel et d'hydrogène.

Aussi, il n'existe pas de solution satisfaisante pour l'injection de dihydrogène dans un réseau de distribution de gaz naturel.

### OBJET DE L'INVENTION

La présente invention vise à remédier à tout ou partie de ces inconvénients.

À cet effet, selon un premier aspect, la présente invention vise un dispositif d'injection de dihydrogène tel que défini par la revendication 1.

Grâce à ces dispositions, une variation brutale de la demande de gaz en aval n'entraîne pas la défaillance du dispositif et anticipe la demande en hydrogène. D'autre part, seul un mélange de gaz et de dihydrogène présentant des caractéristiques, dues à la composition du mélange, conformes à la mise en œuvre sur le deuxième réseau de distribution est fourni à ce réseau.

Dans des modes de réalisation, le moyen d'injection régulée comporte un moyen de régulation en pression du dihydrogène et un moyen de régulation en débit du dihydrogène injecté.

De plus, le dispositif objet de la présente invention permet d'ajuster la quantité de dihydrogène dans le gaz naturel pour mettre ce gaz naturel en conformité avec les besoins du deuxième réseau de distribution.

Dans des modes de réalisation, le dispositif objet de la présente invention comporte :
- un volume de stockage temporaire du mélange de gaz naturel et de dihydrogène, le capteur d'au moins une caractéristique d'une composition captant au moins une caractéristique de la composition du mélange stocké dans le volume de stockage temporaire et
- un moyen de commande d'une vanne d'alimentation du mélange dans le deuxième réseau en fonction de la composition captée,
le volume de stockage étant configuré pour retenir le mélange stocké pendant une durée correspondant à une durée de fonctionnement du capteur d'au moins une caractéristique de la composition du mélange de gaz.

Ces modes de réalisation permettent d'assurer la conformité du mélange, le volume de stockage temporaire mélangeant et stockant le mélange le temps d'une analyse de la composition captée avant son injection dans le réseau.

Dans des modes de réalisation, le dispositif objet de la présente invention comporte :
- une conduite de dérivation de la conduite de raccordement traversée par une partie du flux de gaz naturel du premier réseau vers le deuxième réseau de distribution et
- un moyen de commande d'une vanne d'ouverture ou de fermeture de la conduite de dérivation en fonction de la conformité de chaque caractéristique captée de la composition du mélange par rapport à au moins une plage de caractéristiques prédéterminées.

Ces modes de réalisation permettent, en cas de non-conformité du mélange, de ne pas alimenter le deuxième réseau avec le mélange non conforme.

Dans des modes de réalisation, le dispositif objet de la présente invention comporte un capteur de pression du dihydrogène stocké dans le réservoir de stockage tampon, l'ouverture ou la fermeture de la conduite de dérivation étant commandée en fonction de la pression captée.

Ces modes de réalisation permettent par exemple, lorsque le réservoir de stockage tampon est vide, d'ouvrir la conduite de dérivation.

Dans des modes de réalisation, le dispositif objet de la présente invention comporte en amont du moyen d'injection, un moyen de détente du gaz naturel traversant la conduite de raccordement.

Ces modes de réalisation permettent d'éviter tout rebours du mélange vers l'amont du réseau.

Dans des modes de réalisation, le dispositif objet de la présente invention comporte un mélangeur du mélange de gaz naturel issu de la conduite de raccordement et du dihydrogène.

Ces modes de réalisation permettent de garantir l'homogénéité du mélange.

Dans des modes de réalisation, le dispositif objet de la présente invention comporte un capteur du débit de gaz entrant dans le deuxième réseau.

Ces modes de réalisation permettent de mesurer la quantité de gaz entré dans le deuxième réseau, et de transmettre un signal représentatif de cette mesure.

Selon un deuxième aspect, la présente invention vise un procédé d'injection de dihydrogène dans un flux de gaz naturel issu d'un premier réseau de distribution de gaz naturel, tel que défini par la revendication 8.

Les buts, avantages et caractéristiques particulières de ce procédé objet de la présente invention étant similaires à ceux du dispositif objet de la présente invention, ils ne sont pas rappelés ici.

Dans des modes de réalisation, le procédé objet de la présente invention comporte :
- une étape de stockage temporaire du mélange de gaz naturel et de dihydrogène dans un volume de stockage temporaire, l'étape de capture étant mise en œuvre au niveau de ce volume de stockage temporaire et
- une étape de commande de l'alimentation du mélange stocké dans le deuxième réseau en fonction de chaque caractéristique de la composition captée.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé objet de la présente invention, en regard des dessins annexés, dans lesquels :
- la figure 1 représente, schématiquement, un premier mode de réalisation particulier du dispositif d'injection objet de la présente invention,
- la figure 2 représente, schématiquement, un deuxième mode de réalisation particulier du dispositif d'injection objet de la présente invention,
- la figure 3 représente, schématiquement, un troisième mode de réalisation particulier du dispositif d'injection objet de la présente invention et
- la figure 4 représente, sous forme d'un logigramme, des étapes d'un mode de réalisation particulier du procédé d'injection objet de la présente invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en œuvre indépendamment d'autres paramètres dudit exemple de réalisation.

On note dès à présent que les figures ne sont pas à l'échelle.

La production d'hydrogène est typiquement variable, en fonction de la production d'énergie ambiante et notamment par des énergies renouvelables. L'énergie électrique ainsi produite peut-être excédentaire par rapport aux besoins et doit alors être stockée pour une consommation ultérieure. Comme on le comprendra à la lecture de la présente description, l'invention peut permettre ce stockage d'énergie sous forme de dihydrogène.

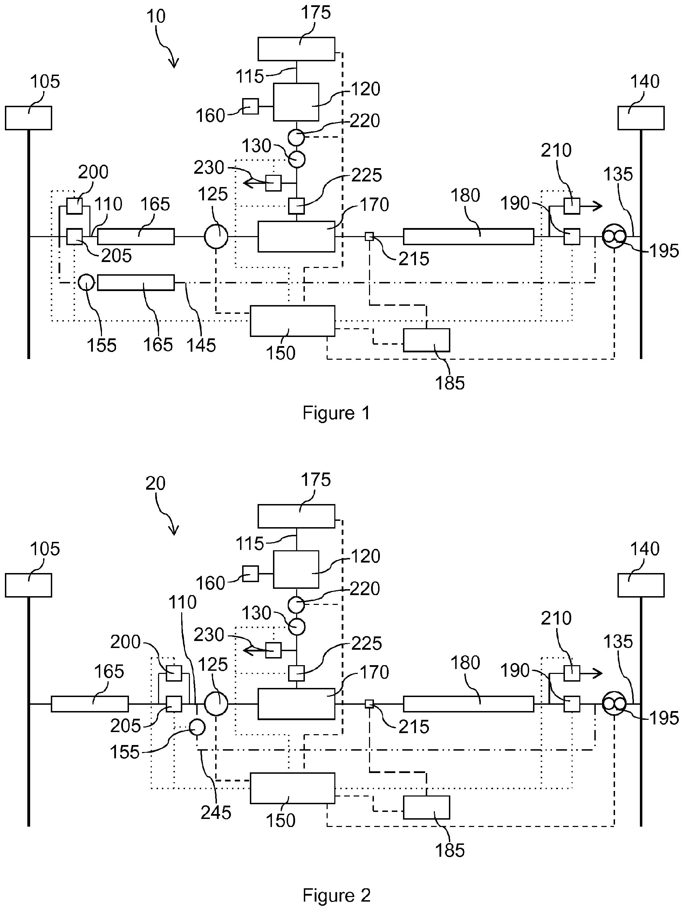

On observe, sur la figure 1, qui n'est pas à l'échelle, une vue schématique d'un premier mode de réalisation du dispositif 10 objet de la présente invention. Ce dispositif 10 d'injection de dihydrogène dans un flux de gaz naturel issu d'un premier réseau 105 de distribution de gaz naturel comporte :
- une conduite 110 de gaz pour raccordement au premier réseau de distribution traversée par un flux de gaz naturel,
- une conduite 115 d'alimentation en dihydrogène comportant un réservoir 120 de stockage tampon de dihydrogène,
- un capteur 125 du débit du flux de gaz naturel traversant la conduite de raccordement fournissant un signal représentatif du débit mesuré,
- un moyen 130 d'injection régulée du dihydrogène stocké dans le réservoir de stockage tampon, dans le gaz traversant la conduite de raccordement, en fonction du débit mesuré,
- un capteur 185 d'au moins une caractéristique d'une composition du mélange de gaz et
- un moyen 135 d'alimentation du mélange de gaz naturel et de dihydrogène, injecté à un deuxième réseau 140 de distribution de gaz naturel, en fonction de chaque caractéristique de la composition du mélange captée.

Le premier réseau 105 de distribution de gaz est, par exemple, un réseau de conduites de gaz reliant une unité de production de gaz naturel à différents points de consommation du gaz ou à différents points d'alimentation d'autres réseaux (non représentés), tel le deuxième réseau 140.

Comme on le comprend, ce dispositif 10 est configuré pour être positionné entre le premier réseau 105 et le deuxième réseau 140. Ces deux réseaux, 105 et 140, peuvent présenter des débits et des géométries diverses.

Le dispositif 10 est positionné, par exemple, au niveau d'un poste réseau de détente habituel du gaz naturel issu du premier réseau 105 dans le deuxième réseau 140, ou d'une antenne d'un premier réseau de distribution 105.

La conduite de gaz 110 est, par exemple, un tuyau étanche de dérivation d'une partie du flux traversant le premier réseau 105. Cette conduite de gaz 110 permet l'alimentation en gaz naturel du premier réseau 105 au deuxième réseau 140.

Dans des variantes, la conduite de gaz 110 comporte un clapet anti-retour de gaz naturel (non représenté) de sorte que le gaz naturel puisse traverser la conduite de gaz 110 uniquement dans un sens.

Le réservoir tampon 120 permet de maintenir la disponibilité de dihydrogène de sorte à avoir une injection dans le réseau régulière, mais ne dépassant préférentiellement pas un seuil prédéterminé. Ce seuil est typiquement compris entre 0 et 25% en fonction de la tolérance des dispositifs consommateurs de gaz, sur le deuxième réseau 140, au dihydrogène.

Le réservoir tampon 120 est, par exemple, un allongement de la conduite 115 d'alimentation en hydrogène ou une augmentation du diamètre de section de ladite conduite 115 afin de stocker un volume de dihydrogène.

Le réservoir tampon 120 est, dans des variantes, un réservoir dédié positionné entre la conduite 115 et le moyen d'injection 130.

Comme on le comprend, le réservoir tampon 120 permet un stockage local de dihydrogène au niveau du moyen d'injection 130.

Ce réservoir tampon 120 permet, en cas de pénurie de fourniture en dihydrogène, au dispositif 10 de fonctionner tant que le réservoir tampon 120 comporte du dihydrogène.

Afin de stocker une forme d'énergie dans le réseau gaz naturel du dihydrogène est injecté dans ce gaz naturel.

Afin de réaliser cette injection, le réservoir 120 de stockage temporaire du dihydrogène est alimenté en dihydrogène par la conduite d'alimentation 115.

Cette conduite d'alimentation 115 est, par exemple, un tuyau étanche alimenté par un module d'électrolyse (non représenté) d'eau dont le dihydrogène produit entre dans la conduite d'alimentation 115. En particulier, ce module d'électrolyse peut être alimenté en électricité par une énergie électrique en excès, produite par exemple par une éolienne.

Dans des variantes, la conduite d'alimentation 115 est reliée à une unité de production de dihydrogène locale ou distante.

Le réservoir 120 est formé :
- par un allongement de la conduite d'alimentation 115 à proximité du moyen d'injection 130,
- par un élargissement de la conduite d'alimentation 115 à proximité du moyen d'injection 130 ou
- par un réservoir dédié indépendant de la capacité de contenance de la conduite d'alimentation 115.

Le capteur 125 est, par exemple, un débitmètre mesurant le débit de gaz naturel traversant la conduite de gaz 110. Ce capteur 125 fournit un signal représentatif du débit mesuré, ce signal étant transmis à un moyen de commande du moyen d'injection 130, tel un automate 150 par exemple.

Le moyen d'injection 130 régulée comporte, par exemple, un moyen de régulation en pression du dihydrogène, et un moyen de régulation en débit. Le moyen de régulation en pression est, par exemple, un poste de détente du dihydrogène. Le moyen de régulation en débit est par exemple une vanne commandée par le moyen de commande. Ce moyen d'injection 130 reçoit une commande d'ouverture pour injecter une quantité ou un volume de dihydrogène déterminé en fonction du débit mesuré par le capteur 125. La vanne employée peut être de tout type de vanne de manipulation de fluide, notamment de gaz. Cette vanne permet l'alimentation de buses d'injection du dihydrogène dans le flux de gaz naturel traversant la conduite de gaz 110.

Dans des variantes, le moyen d'injection 130 comporte un clapet anti-retour de dihydrogène (non représenté) de sorte que le dihydrogène en sortant du gaz issu de la conduite 110 ne retourne pas vers le réservoir 120.

Le volume injecté est déterminé de telle manière que ce volume, ou la quantité de dihydrogène correspondante, représente une proportion prédéterminée du volume, ou respectivement de la quantité, du mélange réalisé. Ainsi, plus le débit de gaz naturel est élevé, plus le volume ou la quantité de dihydrogène injecté est élevé.

Dans des modes de réalisation, tels que celui représenté sur la figure 1, le dispositif 10 comporte, entre une sortie du réservoir 120 et le moyen d'injection 130, un débitmètre 220 pour mesurer le débit et un volume de dihydrogène sorti du réservoir 120. Préférentiellement, un signal représentatif des mesures réalisées par le débitmètre 220 est transmis à l'automate 150.

Dans des modes de réalisation, tels que celui représenté sur la figure 1, le moyen d'injection 130 comporte un robinet d'injection 225, préférentiellement motorisé, en aval du réservoir 120. Ce robinet d'injection 225 est commandé par un moyen de commande, préférentiellement constitué de l'automate 150.

Dans des modes de réalisation, tels que celui représenté sur la figure 1, le moyen d'injection 130 comporte un robinet de purge 230 du dihydrogène du réservoir 120 lorsqu'à la fois la vanne du moyen d'injection 130 et le robinet de purge 230 sont ouverts. Ce robinet de purge 230 est commandé par un moyen de commande, préférentiellement constitué de l'automate 150.

Le mélange de gaz naturel et de dihydrogène est fourni au deuxième réseau 140 par le moyen d'alimentation 135. Ce moyen d'alimentation est, par exemple, une sortie de la conduite 110 raccordée à l'intérieur d'une conduite formant le deuxième réseau 140.

Le capteur 185 est, par exemple, formé par un préleveur 215 d'échantillon du mélange, et d'un module dit « laboratoire d'analyse ». Le préleveur 215 d'échantillon est, par exemple, une dérivation de la conduite de gaz 110. Cette dérivation est, préférentiellement, de petite section par rapport à la section de la conduite de gaz 110.

On entend, par « caractéristique d'une composition », autant la quantité, déterminée en volume, en proportion ou en quantité à proprement dite, de chaque élément composant la composition que les caractéristiques dérivées pouvant être calculées en fonction des quantités d'éléments dans la composition.

Le laboratoire d'analyse détermine une composition du gaz naturel en :
- méthane,
- dihydrogène,
- dioxygène,
- eau et/ou
- tétrahydrothiophène.

Préférentiellement, ce laboratoire d'analyse détermine, de plus, les caractéristiques suivantes :
- l'indice de Wobbe,
- la densité et/ou
- le pouvoir calorifique supérieur (abrévié « PCS »).

Dans des variantes préférentielles, ce laboratoire d'analyse détermine également une composition en :
- dioxyde de carbone,
- sulfure d'hydrogène et/ou
- oxysulfure de carbone.

Si au moins une des caractéristiques captées n'est pas conforme à une caractéristique correspondante type, déterminée par au moins une plage de valeur d'acceptabilité, le mélange est éventé.

Inversement, si chaque caractéristique est conforme, le mélange est fourni au moyen d'alimentation 135.

Ainsi, on comprend que le dispositif 10 objet de la présente invention permet d'alimenter le deuxième réseau 140 en mélange de gaz naturel et de dihydrogène. Lors de la consommation du deuxième réseau 140, du gaz naturel est transféré depuis le premier réseau 105 et mélangé à du dihydrogène. La présence du réservoir 120 de stockage tampon permet, en cas de pic de consommation dans le deuxième réseau 140, de bénéficier d'une réserve de dihydrogène permettant temporairement d'alimenter le deuxième réseau 140 en mélange.

De plus, le deuxième réseau 140 est totalement indépendant du premier réseau 105 de gaz naturel uniquement alimenté par le dispositif objet de la présente invention. Ainsi, l'hydrogène est confiné dans un périmètre restreint.

Dans des modes de réalisation préférentiels, tels que celui représenté en figure 1, le dispositif 10 comporte :
- un volume 180 de stockage temporaire du mélange de gaz naturel et de dihydrogène, le capteur 185 d'au moins une caractéristique d'une composition captant au moins une caractéristique de la composition du mélange stocké dans le volume de stockage temporaire et
- un moyen 150 de commande d'une vanne 190 d'alimentation du mélange dans le deuxième réseau en fonction de chaque caractéristique de la composition captée,
le volume de stockage étant configuré pour retenir le mélange stocké pendant une durée correspondant à une durée de fonctionnement du capteur d'au moins une caractéristique de la composition du mélange de gaz.

Le volume 180 de stockage est, par exemple, un réservoir comportant une entrée (non représentée) et une sortie (non représentée). L'entrée de ce réservoir 180 est positionnée en aval du lieu de mélange du gaz naturel et du dihydrogène et la sortie de ce réservoir 180 en aval de l'entrée et en amont du moyen d'alimentation 135.

Le moyen 135 d'alimentation et le capteur 185 sont agencés pour que le mélange de gaz qui est analysé circule dans le moyen d'alimentation 135 en un temps inférieur au temps d'analyse du mélange. Ainsi, si le mélange n'est pas conforme, il est évacué avant son injection dans le deuxième réseau 140.

Lorsque chaque caractéristique de la composition captée 185 correspond à une valeur, ou une plage de valeurs, déterminée répondant à des spécifications de qualité de composition prédéterminées, le moyen de commande 150 autorise la fourniture au deuxième réseau 140 du mélange présent dans le volume 180.

Ce moyen de commande 150 est, par exemple, un circuit électronique commandant l'ouverture ou la fermeture d'une vanne 190. Ce moyen de commande 150 est préférentiellement confondu avec l'automate 150 de manière à centraliser les moyens de commande du dispositif 10.

Le seuil prédéterminé est déterminé en fonction de la composition du mélange, notamment au regard des composés listés ci-avant mais également des caractéristiques physiques de la composition captée pouvant être calculées.

Par exemple, en plus d'un seuil maximal de proportion d'hydrogène, le mélange doit contenir entre 25 et 40 mg/m³ de tétrahydrothiophène pour garantir la sécurité. En dehors de cette plage, le mélange est considéré comme non utilisable.

Le mélange est fourni au deuxième réseau 140 lorsque toutes les spécifications prédéfinies sont respectées.

La proportion de dihydrogène est, par exemple, régulée par un seuil maximum et non minimal.

La vanne 190 commandée par le moyen de commande 150 est à l'interface entre la conduite 110 et l'intérieur du deuxième réseau 140. Cette vanne 190 est positionnée en aval de la sortie du volume 180 de stockage et en amont du moyen d'alimentation 135.

Dans des modes de réalisation, tels que celui représenté sur la figure 1, le dispositif 10 comporte un moyen 210 de purge du mélange contenu dans le volume 180. Ce moyen de purge 210 est, par exemple, un robinet motorisé relié à une dérivation de la conduite de gaz 110, cette dérivation étant positionnée en aval de la sortie du volume 180.

Dans des modes de réalisation, tels que celui représenté sur la figure 1, le dispositif 10 comporte :
- une conduite 145 de dérivation de la conduite 110 de raccordement traversée par une partie du flux de gaz naturel du premier réseau 105 vers le deuxième réseau 140 de distribution et
- un moyen 150 de commande d'une vanne 155 d'ouverture ou de fermeture de la conduite de dérivation en fonction de la conformité de chaque caractéristique captée de la composition du mélange par rapport à au moins une plage de caractéristiques prédéterminées.

L'entrée (non représentée) de la conduite de dérivation 145 est, par exemple, positionnée en amont du lieu du mélange entre le dihydrogène et le gaz naturel. La sortie (non représentée) de la conduite de dérivation 145 est positionnée en amont du moyen d'alimentation 135.

Dans des modes de réalisation, tels que celui représenté en figure 1, la sortie de la conduite de dérivation 145 est positionnée en aval de la sortie du volume 180 de stockage temporaire du mélange.

Le moyen de commande 150 est, par exemple, l'automate 150. Dans des variantes, le moyen de commande 150 est une unité de calcul distincte de l'automate 150. Ce moyen de commande 150 commande l'ouverture ou la fermeture de la vanne 155 en fonction de la conformité de chaque caractéristique captée de la composition du mélange par rapport à au moins une plage de caractéristique prédéterminée.

La conduite de dérivation permet d'alimenter le deuxième réseau 140 en gaz naturel lorsque la teneur en dihydrogène relevée par le laboratoire dépasse le seuil prédéterminé. Le mélange non conforme est dirigé vers l'atmosphère ou torché et le deuxième réseau 140 est alors alimenté en gaz naturel.

Dans des modes de réalisation, tels que celui représenté en figure 1, le dispositif 10 comporte un moyen de détente 165 du gaz entrant dans la conduite 145 de dérivation. Ce moyen de détente 165 est, par exemple, un poste de détente pour diminuer la pression du gaz naturel. Ce moyen de détente 165 permet d'éviter des retours de dihydrogène vers le premier réseau 105.

Dans des modes de réalisation, tels que celui représenté sur la figure 1, le dispositif 10 comporte un capteur 160 de pression du dihydrogène stocké dans le réservoir 120 de stockage tampon, l'ouverture ou la fermeture de la conduite 145 de dérivation étant, par exemple, commandée en fonction de la pression captée.

Lorsque le réservoir 120 de stockage tampon est vide, la conduite de dérivation 145 est ouverte, par exemple.

Dans des modes de réalisation, tels que celui représenté sur la figure 1, le dispositif 10 comporte en amont du moyen 130 d'injection, un moyen 165 de détente du gaz naturel traversant la conduite 105 de raccordement. Le moyen de détente 165 est, par exemple, un poste de détente du gaz pour réduire la pression du gaz naturel entré dans la conduite de gaz 110.

Dans des modes de réalisation, tels que celui représenté sur la figure 1, le dispositif 10 comporte un mélangeur 170 du mélange de gaz naturel issu de la conduite 110 de raccordement et du dihydrogène. Ce mélangeur 170 peut être une cavité de mélange de la conduite de gaz 110. Ce mélangeur 170 peut également être équipé d'un dispositif de mélange statique ou dynamique.

On entend par mélangeur 170 un dispositif statique ou dynamique permettant de mélanger le dihydrogène au flux de gaz naturel.

Dans des modes de réalisation, tels que celui représenté sur la figure 1, le dispositif 10 comporte un capteur 195 du débit de gaz entrant dans le deuxième 140 réseau. Ce capteur 195 est, par exemple, un débitmètre.

Dans des modes de réalisation, tels que celui représenté sur la figure 1, le dispositif 10 comporte deux entrées, 200 et 205, reliant la conduite 110 de raccordement au premier réseau 105 de distribution. Ces deux entrées, 200 et 205, correspondent respectivement à une ligne primaire et à une ligne secondaire d'alimentation de la conduite de gaz 110. Chaque entrée, 200 et 205, est, par exemple, un robinet motorisé configuré pour permettre ou bloquer l'entrée de gaz depuis le premier réseau 105 dans la conduite de gaz 110.

L'automate 150 est, par exemple, un dispositif comportant une mémoire (non représentée), une unité de calcul (non représentée) et un moyen (non représenté) de transmission de commandes et/ou d'information.

Cet automate 150 est configuré pour recevoir des signaux représentatifs de mesures réalisées par au moins l'un des éléments suivants :
- le capteur 125 du débit du flux de gaz naturel,
- le débitmètre 220,
- le capteur 185 d'au moins une caractéristique de la composition du mélange et/ou
- le capteur 195 du débit de gaz fourni au deuxième réseau 140.

Cet automate 150 est configuré pour émettre des commandes, sous forme de signaux transmis de manière filaire ou sans-fil, à au moins l'un des éléments suivants :
- le robinet ouvrant ou fermant une première 200 entrée de la conduite de gaz 110,
- le robinet ouvrant ou fermant une première 205 entrée de la conduite de gaz 110,
- le robinet 225 d'injection,
- le robinet 230 de purge,
- le moyen d'injection 130,
- la vanne 190 d'alimentation du mélange au deuxième réseau 140 et/ou
- le moyen de purge 210 du mélange dans le volume 180.

On observe, sur la figure 2, qui n'est pas à l'échelle, une vue schématique d'un deuxième mode de réalisation du dispositif 20 objet de la présente invention. Dans ce deuxième mode de réalisation, le dispositif 20 comporte un seul moyen de détente 165 positionné en amont des entrées, 200 et 205. Ce moyen de détente 165 est alors commun à la fois à la conduite de gaz 110 et à la conduite de dérivation 245.

Dans ce deuxième mode de réalisation, l'entrée (non représentée) de la conduite de dérivation 245 est positionnée en aval des entrées, 200 et 205, et en amont du mélangeur 170 ou du lieu de mélange entre le dihydrogène et le gaz naturel.

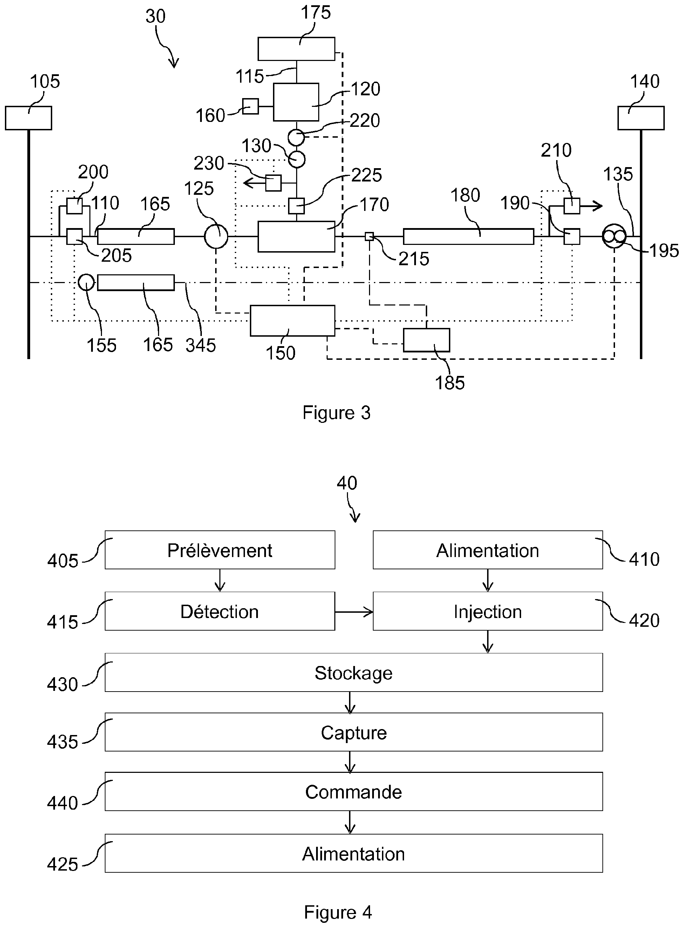

On observe, sur la figure 3, qui n'est pas à l'échelle, une vue schématique d'un troisième mode de réalisation du dispositif 30 objet de la présente invention. Dans ce troisième mode de réalisation, la conduite de dérivation 345 est indépendante de la conduite de gaz 110. L'entrée (non représentée) de la conduite de dérivation 345 est positionnée sur le premier réseau 105, tandis que la sortie (non représentée) est positionnée sur le deuxième réseau 140.

Cette conduite de dérivation 345 comporte, de la même manière que la conduite de dérivation 145 décrite en regard de la figure 1, une vanne 155 d'ouverture ou de fermeture de la conduite de dérivation 345 et un moyen de détente 165 du gaz naturel entrant dans la conduite de dérivation 345.

On observe, sur la figure 4, sous la forme d'un logigramme, des étapes d'un mode de réalisation particulier du procédé 40 d'injection objet de la présente invention. Ce procédé 40 d'injection de dihydrogène dans un flux de gaz naturel issu d'un premier réseau de distribution de gaz naturel comporte :
- une étape 405 de prélèvement de gaz naturel du premier réseau de distribution dans une conduite de raccordement traversée par un flux de gaz naturel,
- une étape 410 d'alimentation en dihydrogène d'un réservoir de stockage tampon de dihydrogène,
- une étape 415 de mesure du débit du flux de gaz naturel traversant la conduite de raccordement,
- une étape 420 d'injection régulée du dihydrogène stocké dans le réservoir de stockage tampon dans le gaz prélevé, en fonction du débit,
- une étape 435 de capture d'au moins une caractéristique d'une composition du mélange de gaz et
- une étape 425 d'alimentation du mélange de gaz naturel et de dihydrogène injecté à un deuxième réseau de distribution de gaz naturel en fonction de chaque caractéristique de la composition du mélange captée.

Dans des modes de réalisation, tels que celui représenté en regard de la figure 4, le procédé 40 comporte :
- une étape 430 de stockage temporaire du mélange de gaz naturel et de dihydrogène dans un volume de stockage temporaire, l'étape 435 de capture étant mise en œuvre au niveau de ce volume de stockage temporaire et
- une étape 440 de commande de l'alimentation du mélange stocké dans le deuxième réseau en fonction de chaque caractéristique de la composition captée.

Ce procédé 40 est réalisé, par exemple, par la mise en œuvre du dispositif, 10, 20 ou 30, décrit en regard de l'une des figures 1, 2 ou 3.

Ainsi, comme on le comprend à la lecture de la description ci-dessus, la présente invention permet de réaliser les fonctions d'un poste réseau classique, c'est à dire assurant la continuité et la sécurité de l'approvisionnement en gaz, en plus de fonctions spécifiques à l'injection d'hydrogène, telles que la réalisation d'un mélange homogène qui respecte une teneur en hydrogène prédéterminée, une analyse de la conformité du mélange, et un système autonome.

## Revendications

1. Dispositif (10, 20, 30) d'injection de dihydrogène dans un flux de gaz naturel issu d'un premier réseau (105) de distribution de gaz naturel, **caractérisé en ce qu'**il comporte :
- une conduite (110) de gaz configurée pour être raccordée au premier réseau de distribution traversée par un flux de gaz naturel,
- une conduite (115) d'alimentation en dihydrogène comportant un réservoir (120) de stockage tampon de dihydrogène,
- un capteur (125) du débit du flux de gaz naturel traversant la conduite de raccordement fournissant un signal représentatif du débit mesuré,
- un moyen (130) d'injection régulée du dihydrogène stocké dans le réservoir de stockage tampon, dans le gaz traversant la conduite de raccordement, en fonction du débit mesuré, pour former un mélange de gaz,
- un capteur (185) d'au moins une caractéristique d'une composition du mélange de gaz,
- un moyen (135) d'alimentation du mélange de gaz naturel et de dihydrogène, injecté à un deuxième réseau (140) de distribution de gaz naturel,
- un moyen de commande (150) configuré pour effectuer une comparaison chaque dite caractéristique de la composition du mélange captée avec une plage de valeurs déterminée pour ladite caractéristique,
- un volume (180) de stockage temporaire du mélange de gaz naturel et de dihydrogène,
- une vanne (190) d'alimentation du mélange dans le deuxième réseau,
**caractérisé en ce que**
- le capteur (185) d'au moins une caractéristique d'une composition capte la au moins une caractéristique de la composition du mélange stocké dans le volume de stockage temporaire et
- la vanne d'alimentation du mélange dans le deuxième réseau est reliée au moyen de commande,
- le moyen (150) de commande de la vanne (190) d'alimentation du mélange dans le deuxième réseau est configuré pour autoriser la fourniture au deuxième réseau lorsque chaque caractéristique de la composition captée correspond avec la plage de valeurs déterminée pour ladite caractéristique, et
le volume de stockage étant configuré pour retenir le mélange stocké pendant une durée correspondant à une durée de fonctionnement du capteur d'au moins une caractéristique de la composition du mélange de gaz.

2. Dispositif (10, 20, 30) selon la revendication 1, dans lequel le moyen (130) d'injection régulée comporte un moyen de régulation en pression du dihydrogène et un moyen de régulation en débit du dihydrogène injecté.

3. Dispositif (10, 20, 30) selon l'une des revendications 1 ou 2, qui comporte :
- une conduite (145, 245, 345) de dérivation de la conduite (110) de raccordement traversée par une partie du flux de gaz naturel du premier réseau vers le deuxième réseau de distribution et
- un moyen (150) de commande d'une vanne (155) d'ouverture ou de fermeture de la conduite de dérivation en fonction de la conformité de chaque caractéristique captée de la composition du mélange par rapport à au moins une plage de caractéristiques prédéterminées.

4. Dispositif (10, 20, 30) selon l'une des revendications 1 à 3, qui comporte un capteur (160) de pression du dihydrogène stocké dans le réservoir (120) de stockage tampon, l'ouverture ou la fermeture de la conduite (145, 245, 345) de dérivation étant commandée en fonction au moins de la pression captée.

5. Dispositif (10, 20, 30) selon l'une des revendications 1 à 4, qui comporte, en amont du moyen (130) d'injection, un moyen (165) de détente du gaz naturel traversant la conduite (105) de raccordement.

6. Dispositif (10, 20, 30) selon l'une des revendications 1 à 5, qui comporte un mélangeur (170) du mélange de gaz naturel issu de la conduite (110) de raccordement et du dihydrogène.

7. Dispositif (10, 20, 30) selon l'une des revendications 1 à 6, qui comporte un capteur (195) du débit de gaz entrant dans le deuxième (140) réseau.

8. Procédé (40) d'injection de dihydrogène dans un flux de gaz naturel issu d'un premier réseau de distribution de gaz naturel, **caractérisé en ce qu'**il comporte :
- une étape (405) de prélèvement de gaz naturel du premier réseau de distribution dans une conduite de raccordement traversée par un flux de gaz naturel,
- une étape (410) d'alimentation en dihydrogène d'un réservoir de stockage tampon de dihydrogène,
- une étape (415) de mesure du débit du flux de gaz naturel traversant la conduite de raccordement,
- une étape (420) d'injection régulée du dihydrogène stocké dans le réservoir de stockage tampon dans le gaz prélevé, en fonction du débit, pour former un mélange de gaz,
- une étape (435) de capture d'au moins une caractéristique d'une composition du mélange de gaz, **caractérisé en ce que** le procédé comporte
- une étape (425) d'alimentation du mélange de gaz naturel et de dihydrogène injecté à un deuxième réseau de distribution de gaz naturel en fonction de la comparaison de chaque dite caractéristique de la composition du mélange captée avec une plage de valeurs déterminée pour ladite caractéristique,
- une étape (430) de stockage temporaire du mélange de gaz naturel et de dihydrogène dans un volume de stockage temporaire, l'étape (435) de capture étant mise en œuvre au niveau de ce volume de stockage temporaire et
- une étape (440) de commande de l'alimentation du mélange stocké dans le deuxième réseau lorsque de chaque caractéristique de la composition captée est dans une plage de valeurs déterminée pour ladite caractéristique.

## Patentansprüche

1. Vorrichtung (10, 20, 30) zur Einleitung von Dihydrogen in einen Strom eines Erdgases aus einem ersten Erdgasverteilernetzwerk (105), **dadurch gekennzeichnet, dass** sie aufweist:
- eine Gasleitung (110), die ausgelegt ist, um an das erste Verteilernetzwerk angeschlossen zu sein, die von einem Erdgasstrom durchquert wird,
- eine Dihydrogen-Zufuhrleitung (115), aufweisend einen Dihydrogen-Pufferspeichervorratsbehälter (120),
- einen Sensor (125) des Durchflusses des Erdgasstroms, der die Anschlussleitung durchquert, der ein Signal bereitstellt, das für den gemessenen Durchfluss repräsentativ ist,
- ein Mittel (130) für die regulierte Einleitung des in dem Pufferspeichervorratsbehälter gespeicherten Dihydrogens in das Gas, das die Anschlussleitung durchquert, in Abhängigkeit von dem gemessenen Durchfluss, um ein Gasgemisch zu bilden,
- einen Sensor (185) mindestens eines Merkmals einer Zusammensetzung des Gasgemischs,
- ein Mittel (135) zur Zufuhr des in ein zweites Erdgasverteilernetzwerk (140) eingeleiteten Gemischs aus Erdgas und aus Dihydrogen,
- ein Steuermittel (150), das ausgelegt ist, um einen Vergleich jedes ermittelten Merkmals der Zusammensetzung des Gemischs mit einem bestimmten Wertebereich für das Merkmal durchzuführen,
- ein vorübergehendes Speichervolumen (180) des Gemischs aus Erdgas und aus Dihydrogen,
- ein Zufuhrventil (190) des Gemischs in das zweite Netzwerk,
**dadurch gekennzeichnet, dass**
- der Sensor (185) mindestens eines Merkmals einer Zusammensetzung das mindestens eine Merkmal der Zusammensetzung des in dem vorübergehenden Speichervolumen gespeicherten Gemischs ermittelt, und
- das Zufuhrventil des Gemischs in das zweite Netzwerk mit dem Steuermittel verbunden ist,
- das Steuermittel (150) des Zufuhrventils (190) des Gemischs in das zweite Netzwerk ausgelegt ist, um die Bereitstellung, für das zweite Netzwerk, zu gestatten, wenn jedes ermittelte Merkmal der Zusammensetzung dem für das Merkmal bestimmten Wertebereich entspricht, und
das Speichervolumen ausgelegt ist, um das gespeicherte Gemisch während einer Dauer zurückzuhalten, die einer Funktionsdauer des Sensors von mindestens einem Merkmal der Zusammensetzung des Gasgemischs entspricht.

2. Vorrichtung (10, 20, 30) nach Anspruch 1, wobei das Mittel (130) für die gesteuerte Einleitung ein Druckregulierungsmittel des Dihydrogens und ein Durchflussregulierungsmittel des eingeleiteten Dihydrogens aufweist.

3. Vorrichtung (10, 20, 30) nach einem der Ansprüche 1 oder 2, die aufweist:
- eine Umleitungsleitung (145, 245, 345) der Anschlussleitung (110), die von einem Teil des Erdgasstroms vom ersten Netzwerk zum zweiten Verteilernetzwerk durchquert wird,
- ein Steuermittel (150) eines Öffnungs- oder Schließventils (155) der Umleitungsleitung in Abhängigkeit von der Konformität jedes ermittelten Merkmals der Zusammensetzung des Gemischs in Bezug auf mindestens einen Bereich vorher festgelegter Merkmale.

4. Vorrichtung (10, 20, 30) nach einem der Ansprüche 1 bis 3, die einen Drucksensor (160) des in dem Pufferspeichervorratsbehälter (120) gespeicherten Dihydrogens aufweist, wobei das Öffnen oder das Schließen der Umleitungsleitung (145, 245, 345) in Abhängigkeit von mindestens des ermittelten Drucks gesteuert wird.

5. Vorrichtung (10, 20, 30) nach einem der Ansprüche 1 bis 4, die dem Einleitungsmittel (130) vorgelagert ein Entspannungsmittel (165) des Erdgases aufweist, das die Anschlussleitung (105) durchquert.

6. Vorrichtung (10, 20, 30) nach einem der Ansprüche 1 bis 5, die einen Mischer (170) des Erdgasgemischs aus der Anschlussleitung (110) und des Dihydrogens aufweist.

7. Vorrichtung (10, 20, 30) nach einem der Ansprüche 1 bis 6, die einen Durchflusssensor (195) des Gases aufweist, das in das zweite (140) Netzwerk eintritt.

8. Verfahren (40) zur Einleitung von Dihydrogen in einen Erdgasstrom aus einem ersten Erdgasverteilernetzwerk, **dadurch gekennzeichnet, dass** es aufweist:
- einen Schritt (405) des Entnehmens von Erdgas aus dem ersten Verteilernetzwerk in einer Anschlussleitung, die von einem Erdgasstrom durchquert wird,
- einen Schritt (410) des Versorgens mit Dihydrogen eines Dihydrogen-Pufferspeichervorratsbehälters,
- einen Schritt (415) des Messens des Durchflusses des Erdgasstroms, der die Anschlussleitung durchquert,
- einen Schritt (420) des regulierten Einleitens des in dem Pufferspeichervorratsbehälter gespeicherten Dihydrogens in das entnommene Gas in Abhängigkeit vom Durchfluss, um ein Gasgemisch zu bilden,
- einen Schritt (435) des Ermitteln mindestens eines Merkmals einer Zusammensetzung des Gasgemischs,
**dadurch gekennzeichnet, dass** das Verfahren aufweist:
- einen Schritt (425) des Zuführens des in ein zweites Erdgasverteilernetzwerk eingeleiteten Gemischs aus Erdgas und aus Dihydrogen in Abhängigkeit von dem Vergleich jedes ermittelten Merkmals der Zusammensetzung des Gemischs mit einem für das Merkmal bestimmten Wertebereich,
- einen Schritt (430) des zeitweiligen Speicherns des Gemischs aus Erdgas und aus Dihydrogen in einem zeitweiligen Speichervolumen, wobei der Schritt (435) des Ermitteln im Bereich dieses zeitweiligen Speichervolumens durchgeführt wird,
- einen Schritt (440) des Steuerns der Zufuhr des in dem zweiten Netzwerk gespeicherten Gemischs, wenn jedes ermittelte Merkmal der Zusammensetzung in einem für das Merkmal bestimmten Wertebereich ist.

## Claims

1. Device (10, 20, 30) for injecting hydrogen into a flow of natural gas coming from a first natural gas distribution network (105), **characterized in that** it comprises:
- a gas line (110) configured to be connected to the first distribution network, and through which a natural gas flow passes;
- a hydrogen supply line (115) comprising a hydrogen buffer storage tank (120);
- a sensor (125) detecting the flow rate of the natural gas flow passing through the connecting line, providing a signal representative of the flow rate measured;
- a means (130) for the regulated injection of the hydrogen stored in the buffer storage tank into the gas passing through the connecting line as a function of the flow rate measured in order to form a gas mixture;
- a sensor (185) detecting at least one characteristic of a composition of the gas mixture;
- a means (135) for supplying the mixture of natural gas and hydrogen, injected into a second natural gas distribution network (140);
- a control means (150) configured to compare each said characteristic of the composition of the mixture detected to a defined range of values for said characteristic;
- a temporary storage volume (180) of the mixture of natural gas and hydrogen;
- a valve (190) for supplying the mixture into the second network,
**characterized in that**
- the sensor (185) detecting at least one characteristic of a composition detects at least one characteristic of the composition of the mixture stored in the temporary storage volume; and
- the valve supplying the mixture into the second network is connected to the control means;
- the means (150) for controlling the valve (190) supplying the mixture into the second network is configured to allow the supply to the second network when each characteristic of the composition detected matches the range of values defined for said characteristic; and
- the storage volume being configured to retain the stored mixture for a period of time corresponding to an operating period of the sensor of at least one characteristic of the composition of the gas mixture.

2. Device (10, 20, 30) according to claim 1, wherein the regulated injection means (130) comprises a means for regulating the pressure of the hydrogen and a means for regulating the flow rate of the hydrogen injected.

3. Device (10, 20, 30) according to one of claims 1 or 2, which comprises:
- a bypass line (145, 245, 345) of the connecting line (110) through which a portion of the natural gas flows from the first network towards the second distribution network; and
- a means (150) for controlling a valve (155) opening or closing the bypass line as a function of the conformity of each detected characteristic of the composition of the mixture in relation to at least one predefined range of characteristics.

4. Device (10, 20, 30) according to one of claims 1 to 3, which comprises a sensor (160) detecting the pressure of the hydrogen stored in the buffer storage tank (120), the opening or closing of the bypass line (145, 245, 345) being controlled as a function at least of the pressure detected.

5. Device (10, 20, 30) according to one of claims 1 to 4, which comprises, upstream from the injection means (130), a means (165) for expanding the natural gas passing through the connecting line (105).

6. Device (10, 20, 30) according to one of claims 1 to 5, which comprises a mixer (170) for the mixture of natural gas from the connecting line (110) and the hydrogen.

7. Device (10, 20, 30) according to one of claims 1 to 6, which comprises a sensor (195) detecting the flow rate of gas entering the second network (140).

8. Method (40) of injecting hydrogen into a flow of natural gas coming from a first natural gas distribution network, **characterized in that** it comprises:
- a step (405) of collecting natural gas from the first distribution network in a connecting line through which a natural gas flow passes;
- a step (410) of supplying hydrogen from a hydrogen buffer storage tank;
- a step (415) of measuring the flow rate of the natural gas flow passing through the connecting line;
- a step (420) of the regulated injection of the hydrogen stored in the buffer storage tank into the gas collected as a function of the flow rate to form a gas mixture;
- a step (435) of detecting at least one characteristic of a composition of the gas mixture,
**characterized in that** the method comprises:
- a step (425) of supplying the mixture of natural gas and hydrogen, injected into a second natural gas distribution network as a function of the comparison of each said characteristic of the composition of the mixture detected to a defined range of values for said characteristic;
- a step (430) of temporarily storing the mixture of natural gas and hydrogen in a temporary storage volume, the detection step (435) being utilized at the location of this temporary storage volume; and
- a step (440) for controlling the supply of the stored mixture into the second network when each characteristic of the composition detected is in a defined range of values for said characteristic.
